# EUROPEAN PATENT APPLICATION

(11) **EP 3 176 765 A1**
(43) Date of publication of application: **07.06.2017**
(21) Application number: 16201970.7
(22) Date of filing: 02.12.2016
(51) Int. Cl.: G07G 1/01, G06Q 30/02, G07G 1/12, G06Q 20/20

(54) **DISPLAY DEVICE OF A POINT-OF-SALE TERMINAL AND CONTROL METHOD THEREOF**

(30) Priority: 02.12.2015 JP 2015235689
(71) Applicant: Toshiba TEC Kabushiki Kaisha, Tokyo 141-0032 (JP)
(72) Inventor: OHOTSU, Kazuhiko, Shinagawa-ku, Tokyo 141-8562 (JP); TANIMOTO, Koji, Shinagawa-ku, Tokyo 141-8562 (JP); SATO, Naoya, Shinagawa-ku, Tokyo 141-8562 (JP); SEKINE, Naoki, Shinagawa-ku, Tokyo 141-8562 (JP); KATO, Masakazu, Shinagawa-ku, Tokyo 141-8562 (JP); SOUMA, Akihiro, Shinagawa-ku, Tokyo 141-8562 (JP)
(74) Representative: Takeuchi, Maya

(57) **Abstract**

A POS terminal includes a display device, a sensor, and a processor configured to determine an amount of merchandise based on a signal output from the sensor, determine a display pattern of a plurality of content images based on the determined amount of merchandise, and control the display device to display the content images according to the determined display pattern.

## Description

### METHOD THEREOF

The present invention generally relates to the field of a store management system and, in particular, to a POS terminal device and a method for controlling a display unit on a POS terminal device, as well as to a non-transitory computer readable medium containing instructions for controlling a display unit on a POS terminal device, whose instructions cause a computer to perform the step of the said method. The invention also relates to a system for reading the merchandise, comprising the said POS terminal device.

### BACKGROUND

A merchandise reading device is typically included in a Point-of-Sale (POS) terminal. The merchandise reading device optically reads a code symbol, e.g., a barcode, or the like, which is attached to a merchandise. The POS terminal obtains an identification code of merchandise from the code symbol which is read by the merchandise reading device, and retrieves from a merchandise database, merchandise data which is identified by the identification code, for example, a name of merchandise, a unit price, or the like. In addition, the POS terminal registers merchandise sales data such as the identification code, a unit price, the number of merchandise, an amount of money, or the like, into a memory, and displays the name of merchandise, the unit price, and the like, on display devices.

The display devices include a customer display and a display viewed by an operator (usually, sales person). The customer display is provided in the POS terminal, in order to display a unit price of purchased merchandise or a total price of all purchased merchandise which is read by the merchandise reading device for a customer who is purchasing the merchandise.

To improve the conventional devices, there is provided a POS terminal device comprising:
a display device;
a sensor; and
a processor configured to:
   determine an amount of merchandise based on a signal output from the sensor,
   determine a display pattern of a plurality of content images based on the determined amount of merchandise, and
   control the display device to display the content images according to the determined display pattern.

Preferably, the processor determines a display time for displaying each of the content images, based on the amount of merchandise.

Preferably still, the processor determines the display time to be a first predetermined time if the amount of merchandise detected is larger than a first predetermined amount, and determines the display time to be a second time shorter than the first time if the amount of merchandise detected is smaller than the first predetermined amount.

Preferably yet, the processor determines a total amount of merchandise when registration of the merchandise begins, and detects a remaining amount of the merchandise after at least one item of the merchandise has been registered, and

the processor calculates a difference between the total amount and the remaining amount, and reduces the display time by a correction amount if the calculated difference is larger than a predetermined difference.

Suitably, the processor determines a number of content images displayed at one time based on the amount of merchandise.

Suitably still, the processor controls the display device to display one content image at one time if the determined amount of merchandise is larger than a first predetermined amount, controls the display device to display a plurality of content images at the same time if the determined amount of merchandise is smaller than the first predetermined amount.

Suitably yet, the sensor is a weight sensor and the amount of merchandise corresponds to the weight of merchandise.

The invention also relates to a method for controlling a display unit on a POS terminal device comprising the steps of:
determining an amount of merchandise based on a signal output from a sensor;
determining a display pattern of a plurality of content images based on the determined amount of merchandise; and
controlling the display unit to display the content images according to the determined display pattern.

Preferably, determining the display pattern includes determining a display time for displaying each of the content images, based on the amount of merchandise.

Preferably still, the display time is determined to be a first predetermined time if the amount of merchandise detected is larger than a first predetermined amount, and the display time is determined to be a second time shorter than the first time if the amount of merchandise detected is smaller than the first predetermined amount.

Preferably yet, a total amount of merchandise is determined when registration of the merchandise begins, and a remaining amount of the merchandise is detected after at least one item of the merchandise has been registered, the method further comprising the steps of:
calculating a difference between the total amount and the remaining amount; and
reducing the display time by a correction amount if the calculated difference is larger than a predetermined difference.

Suitably, the method further comprises the step of:
determining a number of content images displayed at one time based on the amount of merchandise.

Suitably still, the display unit is controlled to display one content image at one time if the determined amount of merchandise is larger than a first predetermined amount, and to display a plurality of content images on at the same time if the determined amount of merchandise is smaller than a first predetermined amount.

In the above device, the sensor is preferably a weight sensor and the amount of merchandise corresponds to the weight of merchandise.

The invention further relates to a non-transitory computer readable medium containing instructions for controlling a display unit on a POS terminal device, the instructions causing a computer to perform the step of the method defined above.

The invention also concerns a system for reading the merchandise, comprising the POS terminal device as defined above.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is an external view of a store POS system provided with a POS terminal according to an embodiment.
FIG. 2 is a block diagram which illustrates an example configuration of the POS terminal.
FIG. 3 is a diagram of a registration screen which is displayed on a customer display of the POS terminal.
FIGs. 4A and 4B illustrate data tables which are stored in the POS terminal.
FIG. 5 is a flowchart which illustrates an example sequence of operations for controlling an image display device.
FIG. 6 illustrates a time setting table which is stored in a POS terminal according to a second embodiment.
FIGS. 7-9 are flow charts which illustrates an example sequence of operations for controlling an image display device according to the second embodiment.

### DETAILED DESCRIPTION

According to exemplary embodiments, a display control device can efficiently show a plurality of image contents to a customer, regardless of an amount of purchased merchandise.

A POS terminal according to an embodiment includes a display device, a sensor, and a processor configured to determine an amount of merchandise based on a signal output from the sensor, determine a display pattern of a plurality of content images based on the determined amount of merchandise, and control the display device to display the content images according to the determined display pattern.

Hereinafter, embodiments of a display controller will be described, using drawings.

The embodiments exemplify a display controller for controlling a customer display of a POS terminal which is used in a store such as a supermarket. The POS terminal is provided in a checkout area in a store, and reads a merchandise code (usually, a barcode, or a two-dimensional data code) as an identification code of merchandise which is purchased by a customer, by scanning thereof. The display controller controls the customer display to display image contents along with merchandise data specified by the merchandise code which is read by the POS terminal. The image contents may be a notification to a customer who performs accounting of purchased merchandise. For example, the image contents may be an advertisement for a new product, a notification of a special sale, a coupon for merchandise, or the like.

### (First Embodiment)

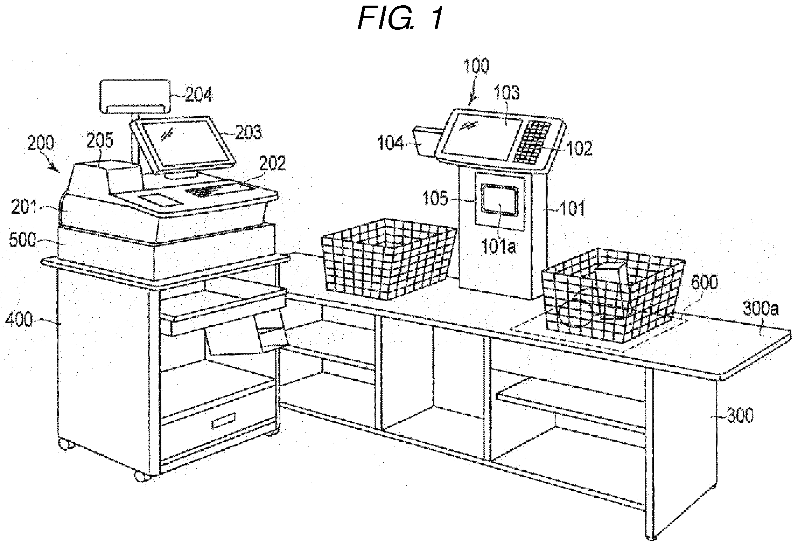

FIG. 1 is an external view of a store POS system. As illustrated in FIG. 1, the store accounting system includes a POS terminal 100, which is a POS terminal operated by a customer, and a POS terminal 200, which is a POS terminal operated by a store person.

The POS terminal 100 is mounted on an accounting counter 300. The POS terminal 200 includes a drawer 500 which is mounted on a register table 400. The POS terminals 100, 200 are electrically connected, using a communication cable (not illustrated). The POS terminal 200 may include an automatic change machine instead of (or in addition to) the drawer 500.

The POS terminal 100 includes a housing 101, a keyboard 102, a touch panel 103, a customer display 104 (display unit), and a scanner 105.

The housing 101 is formed in a planar box shape, and is mounted on the accounting counter 300. The housing 101 supports the keyboard 102, the touch panel 103, and the customer display 104. The scanner 105 is mounted inside the housing 101. The housing 101 includes a reading window 101a, which is open to the scanner 105. The scanner 105 can scan an object which is located in front of the reading window 101a.

The POS terminal 200 includes a housing 201, a keyboard 202, an operator display 203, a customer display 204, and a printer 205.

The housing 201 supports the keyboard 202 so that a key arrangement portion thereof faces the outside. The housing 201 also supports the operator display 203 and the customer display 204 so that the displays face the outside. The housing 201 supports the printer 205 on the inside.

The accounting counter 300 includes an elongated top surface 300a. The accounting counter 300 is divided into a customer area (depth side in FIG. 1) which extends along a longitudinal direction of the top surface, and an operator area (near side in FIG. 1). The housing 101 of the POS terminal 100 is mounted to the top surface 300a. The housing 101 is located at approximately a center of the top surface 300a in the longitudinal direction. In addition, the housing 101 supports the keyboard 102, the touch panel 103, and the reading window 101a facing the operator space side, respectively. The housing 101 also supports the customer display 104 facing the customer area.

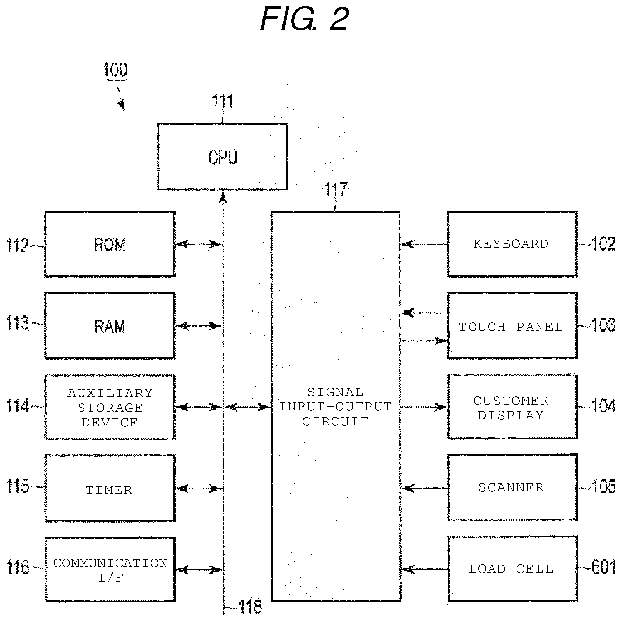

On a top face of the top surface 300a, a region on an upstream side in a customer moving direction of the POS terminal 100 is used as a space for placing merchandise to be purchased by a customer, but which a sales registration is not finished (that is, unregistered merchandise). In addition, a region on the downstream side is used as a space for placing merchandise for which a sales registration is finished (that is, registered merchandise). A portion of space of the top surface 300a for placing unregistered merchandise includes a scale unit 600. The scale unit 600 includes a weight sensor, e.g., a load cell 601 (refer to FIG. 2), and measures a weight of an object which is placed on the scale unit 600. Usually, a shopping basket which accommodates merchandise of a customer who is performing accounting is placed on the scale unit 600. Purchased merchandise may also be directly placed on the scale unit 600 without using a shopping basket. Incidentally, a top surface of the scale unit 600 is flush with the top surface 300a, and it is possible to move a shopping basket which is placed in a space other than the scale unit 600 by sliding the basket onto the scale unit 600.

FIG. 2 is a block diagram which illustrates an example configuration of the POS terminal 100. The POS terminal 100 includes a central processing unit (CPU) 111, a read only memory (ROM) 112, a random access memory (RAM) 113, an auxiliary storage device 114, a timer 115, a communication interface 116, a signal input-output circuit 117, and a system bus 118. In addition, the POS terminal 100 may be provided as a computer in which the CPU 111, the ROM 112, the RAM 113, and the auxiliary storage device 114 are connected using the system bus 118. The timer 115, the communication interface 116, and the signal input-output circuit 117 are connected via the system bus 118.

The CPU 111 corresponds to a central portion of a computer. The ROM 112 corresponds to a main storage portion of the computer. The ROM 112 stores the above-described operating system or an application program. The RAM 113 corresponds to another main storage portion of the above described computer. The RAM 113 stores data which is necessary as the CPU 111 executes processes. The auxiliary storage device 114 corresponds to an auxiliary storage portion of the above described computer. The auxiliary storage device 114 is for example, an electric erasable programmable read-only memory (EEPROM), a hard disc drive (HDD), a solid state drive (SSD), or the like.

The timer 115 tracks a set time. The communication interface 116 controls data communication performed between the interface and the POS terminal 200 which are connected through a communication cable. The signal input-output circuit 117 sends and receives a data signal between the circuit and an input-output device supported by the housing 101 such as, for example, the keyboard 102, the touch panel 103, the customer display 104, or the scanner 105. In addition, the signal input-output circuit 117 receives an electric signal from the load cell 601 of the scale unit 600 provided in the accounting counter 300.

The keyboard 102 includes a plurality of keys, and outputs a command denoting operation instructions from an operator with respect to these key switches.

The touch panel 103 includes, for example, a display device such as a liquid crystal display (LCD), and a transparent two-dimensional touch sensor which is disposed at a display screen of the display device in an overlapping manner. The touch panel 103 displays an arbitrary image on the display device under a control of the CPU 111. The touch panel 103 detects a touch position of an operator on the display screen of the display device in the two-dimensional touch sensor, and outputs coordinate data which denotes the touch position. The touch panel 103 is used in order to display various pieces of information which are to be presented to an operator, or to receive input operations from the operator.

The customer display 104 displays arbitrary character strings or image under a control of the CPU 111. The customer display 104 is used in order to display various character strings or images which are to be presented to a customer. As the customer display 104, it is possible to use, for example, a fluorescent tube display, or an LCD. It is also possible to use a touch panel as the customer display 104.

The scanner 105 optically reads a merchandise code on merchandise which is held up in front of the reading window 101a. The merchandize code may be a barcode or a two-dimensional data code attached to each merchandise item. The scanner 105 optically reads the merchandise code. In addition, the scanner 105 outputs information corresponding to the merchandise code to the CPU 111. For the scanner 105, it is possible to use a well-known device which can read a code symbol using reflection of laser light. In addition, for the scanner 105, it is also possible to use a well-known device which recognizes the merchandise from an image which is obtained by performing image capturing of merchandise.

The load cell 601 outputs a weight of a shopping basket or purchased merchandise which is placed on the scale unit 600 to the CPU 111 by converting the weight into an electric signal.

In the POS terminal 100, a display control device for the customer display 104 includes the CPU 111, the ROM 112, the RAM 113, the auxiliary storage device 114, the timer 115, and the signal input-output circuit 117. Hereinafter, the display control device will be described in detail.

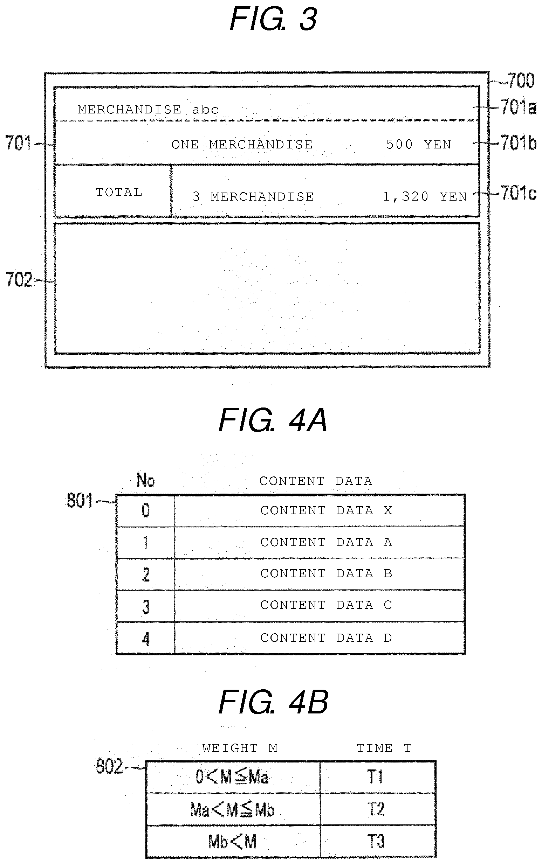

FIG. 3 is an example of a registration screen 700. The registration screen 700 is displayed on the customer display 104 from during registration of merchandise which a customer purchases. When a merchandise code of one item of merchandise is input, the CPU 111 acknowledges a start of registration. For example, when a code symbol of first merchandise item which is purchased by one customer or a group of customers is read by the scanner 105, the CPU 111 acknowledges the start of registration. When it is acknowledged as the start of registration, the CPU 111 causes the customer display 104 to display the registration screen 700. When the end of merchandise registration for the transaction is declared, the CPU 111 acknowledges as an end of registration. For example, when an end button displayed on the touch panel 103 is touched by an operator, the CPU 111 acknowledges the end of registration. When the end of registration is acknowledged, the CPU 111 finishes displaying the registration screen 700 on the customer display 104.

The registration screen 700 includes a data display area 701 and an image display area 702. According to the embodiment, a screen is vertically divided into two areas. The upper area is set to the data display area 701. The lower area is set to the image display area 702. The upper area may be set to the image display area 702, and the lower area may be set to the data display area 701. Further, one area may be set to the data display area 701, and the other area may be set to the image display area 702, by horizontally dividing the screen into the two areas.

The data display area 701 includes a merchandise name region 701a , a merchandise number and price region 701b, and a total merchandise number and price region 701c. The names of the merchandise identified by merchandise codes read by the scanner 105 are displayed on the merchandise name region 701a. The merchandise number and price (unit pricexnumber of purchased merchandise) of the same merchandise are displayed on the merchandise number and price region 701b. A total number of merchandise and a total amount of money for one transaction are displayed on the total merchandise number and price region 701c.

When a merchandise symbol which is read by the scanner 105 is input, the CPU 111 obtains a merchandise code from the information. After obtaining the merchandise code, the CPU 111 retrieves a merchandise database which is stored in the auxiliary storage device 114, and reads data corresponding to the merchandise which is identified by the merchandise code, for example, an merchandise name, a unit price, and the like. In addition, the CPU 111 registers merchandise sales data such as a merchandise code, a unit price, the number of merchandise, and an amount of money in the RAM 113. The CPU 111 displays the merchandise name in the merchandise name region 701a, and displays the number of merchandise and the amount of money in the merchandise number and price region 701b. The CPU 111 displays a total number of merchandise and a total amount of money of the merchandise sales data which is registered in the RAM 113 on the total merchandise number and price region 701c.

Such a display control of the data display area 701 is executed when the CPU 111 performs information processing according to the display control program which is stored in the ROM 112 or the auxiliary storage device 114.

Meanwhile, also a display control of the image display area 702 is executed when the CPU 111 performs information processing according to the above described display control program. In addition, when the display control is executed, the display control device generates a content table 801, which is illustrated in FIG. 4A, and a weight-time table 802, which is illustrated in FIG. 4B. The content table 801 and weight-time table 802 may be stored, for example, in the RAM 113 or in the auxiliary storage device 114.

The content table 801 stores a plurality of content data X, A, B, C, D, ... , in association with consecutive numbers which start from "0", respectively. All of the content data X, A, B, C, D, ... are image data which can be displayed in the image display area 702. The image data is for example, an advertisement for a new product, a notification of a special sale, a merchandise coupon, or the like. The particular type of image data is not particularly limited. According to the embodiment, five content data X, A, B, C, and D are stored in the content table 801, in association with consecutive numbers from "0" to "4".

The weight-time table 802 stores a time T with respect to ranges of a weight M. The ranges of weight Mare different weight ranges. The weight M is a total weight of merchandise purchased by one customer or a group of customers. The time T is a display time for one content data. The display control device causes the image display area 702 to appropriately display content data which is stored in the content table 801. According to the embodiment, a display time T of the content data varies according to a total weight M of merchandise. Specifically, if a total weight M of merchandise is less than or equal to Ma or less, the display time T is set to T1 [second]. If a total weight M of merchandise is greater than Ma and less than or equal to Mb (where Mb>Ma), the display time T is set to T2 (where T2>T1). If a total weight M of merchandise is larger than Mb, the display time T is set to T3 (where T3>T2>T1). That is, the display time T is set with respect to the weight-time table 802 so that the smaller the total weight M of merchandise, the shorter the display time T.

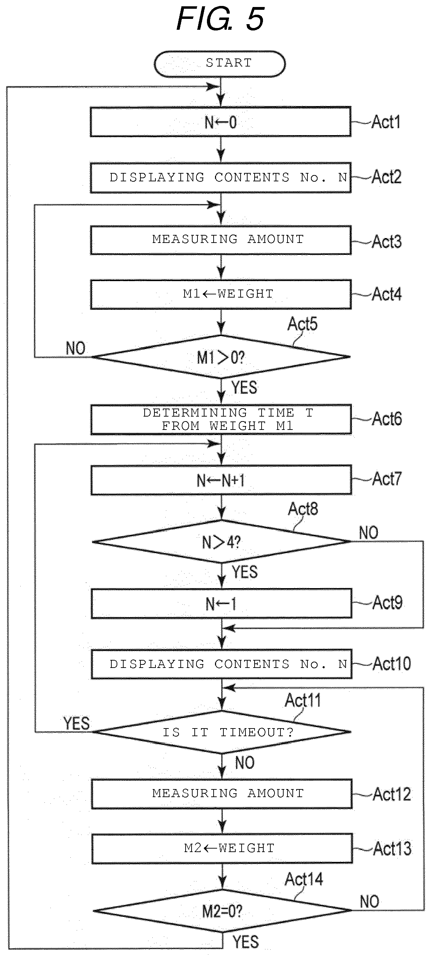

FIG. 5 is a flowchart which illustrates an example sequence of operations for controlling the image display area 702. The CPU 111 executes information processing in a procedure illustrated in the flowchart in FIG. 5, according to the display control program which is stored in the ROM 112 or the auxiliary storage device 114. Processes illustrated in FIG. 5 and described below are examples, and it is possible to appropriately use various processes which can obtain the same result.

The CPU 111 resets a number counter N to "0" (Act 1). The number counter N is stored in, for example, the RAM 113. When the number counter N is reset, the CPU 111 reads the content data X which is associated with a value of the counter N (N=0) from the content table 801 (Act 2). In addition, the CPU 111 causes the image display area 702 to display an image based on the content data X.

The CPU 111 detects weight data measured by the scale unit 600 based on the electric signal output from the load cell 601 (Act 3). In addition, the CPU 111 stores the weight data in a first work memory M1 (Act 4). The first work memory M1 is formed in the RAM 113. The CPU 111 determines whether the weight data stored in the first work memory M1 (hereinafter, referred to as weight M1) is larger than "0" (Act 5). In a state in which an object is mounted on the scale unit 600, the weight M1 becomes a value larger than "0". However, in a state in which an object is not mounted on the scale unit 600, the weight M1 is "0". If the weight M1 is "0" (No in Act 5), the CPU 111 returns to the process in Act 3. Accordingly, an image based on the content data X is displayed in the image display area 702 when nothing is mounted on the scale unit 600.

For example, when a shopping basket in which purchased merchandise of a customer is put is mounted on the scale unit 600, the weight M1 has a value larger than "0". When the weight M1 has a value larger than "0" (Yes in Act 5), the CPU 111 determines a time T based on the weight M1 (Act 6). That is, the CPU 111 retrieves the weight-time table 802, and reads a time T corresponding to a range (level) in which the weight M1 is included. In addition, the CPU 111 sets the time T to the timer 115 (determining section).

According to the embodiment, the weight of the shopping basket may be neglected. That is, when the shopping basket which accommodates purchased merchandise is placed on the scale unit 600, the weight of the shopping basket and the purchased merchandise is to the total weight M1. Since the weight of the shopping basket is approximately uniform, and is a relatively light weight, there is no problem if the weight of the shopping basket is neglected. However, if obtaining an accurate total weight of purchased merchandise by excluding a weight of the shopping basket is desired, a shopping basket key may be included in the keyboard 102. When the shopping basket key is operated, a preset weight of the shopping basket is subtracted from the weight measured by the scale unit 600, and the difference is set as the total weight M1 of the purchased merchandise. Alternatively, a no shopping basket key may be set in the keyboard 102. In such a case, if the no shopping basket key is not operated, a preset weight of the shopping basket is subtracted from the weight measured in the scale unit 600 and the difference is set as a total weight M1 of purchased merchandise. If the no shopping basket key is operated, the weight which is measured in the scale unit 600 is set as the total weight M1 of purchased merchandise, as-is.

After determining the time T based on the weight M1, the CPU 111 increments the number counter N by "1" (Act 7). In addition, the CPU 111 determines whether the number counter N exceeds a maximum value of the consecutive numbers of the content table 801 (for example, "4") (Act 8). If the number counter N exceeds the maximum value (Yes in Act 8), the CPU 111 sets the number counter N to "1" (Act 9). In addition, the CPU 111 proceeds to process in Act 10. Meanwhile, if the number counter N does not exceed the maximum value (No in Act 8), the CPU 111 proceeds to process in Act 10, without performing the process of Act 9.

In Act 10, the CPU 111 reads content data which is associated with a value of the number counter N from the content table 801. In addition, the CPU 111 causes the image display area 702 to display an image based on the content data (control section). For example, if a value of the number counter N is "1", an image based on content data A is displayed in the image display area 702.

The CPU 111 causes the image display area 702 to display the image based on the content data, and starts up the timer 115 at the same time. In addition, the CPU 111 determines whether the timer 115 has entered a timeout state (Act 11). If a tracking time reaches the set time T, the timer 115 enters the timeout state. If the timer 115 has not entered the timeout state (Yes in Act 11), the CPU 111 receives weight data measured by the scale unit 600 via the signal from the load cell 601 (Act 12). In addition, the CPU 111 stores the weight data in a second work memory M2 (Act 13). The second work memory M2 is formed in the RAM 113. The CPU 111 confirms whether or not the weight data (hereinafter, referred to as weight M2) stored in the second work memory M2 is larger than "0", as Act 14. If the weight M2 is larger than "0", an object such as a shopping basket is determined to be still mounted on the scale unit 600. In this case (No in Act 14), the CPU 111 returns to the process in Act 11. That is, the CPU 111 determines whether the timer 115 has entered the timeout state.

If the timer 115 has entered the timeout state (Yes in Act 11), the CPU 111 returns to the process in Act 7. Thereafter, the CPU 111 performs the process in Act 7 and thereafter, as described above.

When the weight M2 is determined to be "0" (Yes in Act 14), the CPU 111 returns to the process in Act 1. Thereafter, the CPU 111 performs the process in Act 1 and thereafter, as described above.

By executing the above-described display control with respect to the image display area 702, images based on the content data A, B, C, and D stored in the content table 801 are displayed in the image display area 702 in a display pattern. That is, the images based on the content data A, B, C, and D are displayed in rotation, and the images are switched after every display time T determined from the total weight M1 of purchased merchandise which is measured in the scale unit 600. In addition, if a weight of purchased merchandise is not measured in the scale unit 600, an image based on the content data X is displayed in the image display area 702. In addition, the content data X may be omitted. In such a case, if a weight of purchased merchandise is not measured in the scale unit 600, an image is not displayed in the image display area 702.

The display time T varies according to a total weight M1 of purchased merchandise. That is, the smaller the total weight M1, the shorter the display time T. If the number of purchased merchandise is small, a total weight M of merchandise is also small, in general. If the number of purchased merchandise is small, a time necessary for registering purchased merchandise is relatively short. For this reason, a time for a customer for viewing an image on the customer display 104 is short. According to the embodiment, a smaller total weight M of merchandise results in a shorter display time T. Thus, it is also possible to show images based on different content data to the customer who has a small number of purchased merchandise.

Conversely, if the number of purchased merchandise is large, a total weight M of merchandise is large, in general. If the number of purchased merchandise is large, a time necessary for registering purchased merchandise is long. For this reason, a time for a customer to view an image on the customer display 104 is long. According to the embodiment, a larger total weight M of merchandise results in a longer display time T. Thus, it is possible to slowly show the images based on the different content data to the customer who has a large number of purchased merchandise.

Therefore, according to the embodiment, it is possible to efficiently show a customer a plurality of different images, regardless of an amount of purchased merchandise.

### (Second Embodiment)

In a second embodiment, a display control device for the customer display 104 will be described, similar to the first embodiment. Since FIGS. 1 to 3 which are used in descriptions of the first embodiment are common to those in the second embodiment, descriptions here will be omitted.

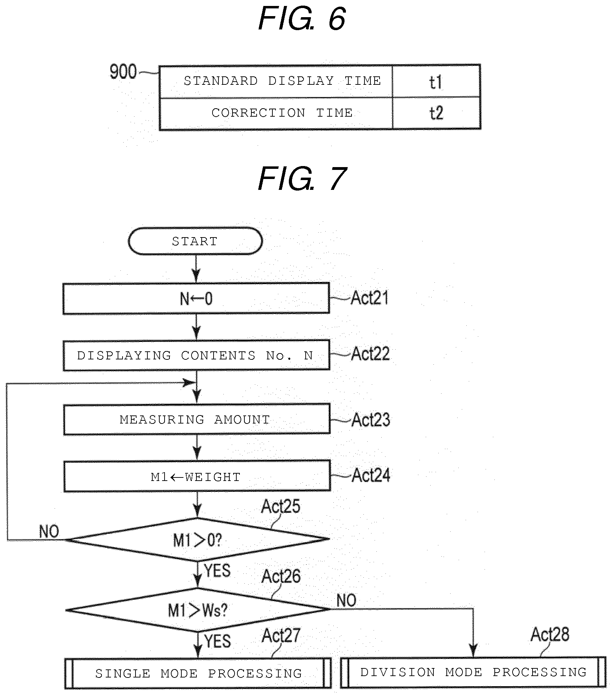

In the second embodiment, the RAM 113 or the auxiliary storage device 114 stores a time setting table 900 which is illustrated in FIG. 6, instead of the weight-time table 802. The time setting table 900 stores a standard display time t1 of image contents, and a correction time t2 (t2<t1) of the standard display time. The standard display time t1 is an appropriate time (for example, 10 seconds) as a time for displaying, in the image display area 702, an image based on each content data A, B, C, and D stored in the content table 801. The correction time t2 is an arbitrary time (for example, 2 seconds) which is shorter than the standard display time t1.

FIGS. 7-9 are flow charts which illustrates an example sequence of operations for controlling the image display area 702 according to the second embodiment. The CPU 111 executes information processing illustrated in the flowcharts in FIGS. 7 to 9, according to the display control program which is stored in the ROM 112 or the auxiliary storage device 114. Processes which are illustrated in FIGS. 7 to 9, and described below are examples, and various processes to obtain the same result can be appropriately used.

The CPU 111 executes the same processes as those in Act 1 to Act 5 in the first embodiment, as Act 21 to Act 25, respectively. In addition, if a weight M1 measured in the scale unit 600 is larger than "0" (Yes in Act 25), the CPU 111 determines whether the weight M1 is greater than a first threshold value Ws (Act 26). If the weight M1 is greater than the first threshold value Ws (Yes in Act 26), the CPU 111 executes single mode processing, (Act 27). In contrast to this, if the weight M1 is less than the first threshold value Ws (No in Act 26), the CPU 111 executes division mode processing, (Act 28).

In the single mode, an image based on one content data is displayed on a screen of the image display area 702. In the division mode, images based on two content data are displayed at the same time, by dividing the display area 702 into two areas, either horizontally or vertically. For example, if it is desired to show a customer each image based on content data A, B, C, and D for 10 seconds or more, it takes 40 seconds in total. Therefore, a registration processing time assumed from the weight M1 is 40 seconds, which is set as the first threshold value Ws. By setting the first threshold value Ws in this manner, the division mode processing is executed if a registration processing time is less than 40 seconds, and the single mode processing is executed if a registration processing time is 40 seconds or more.

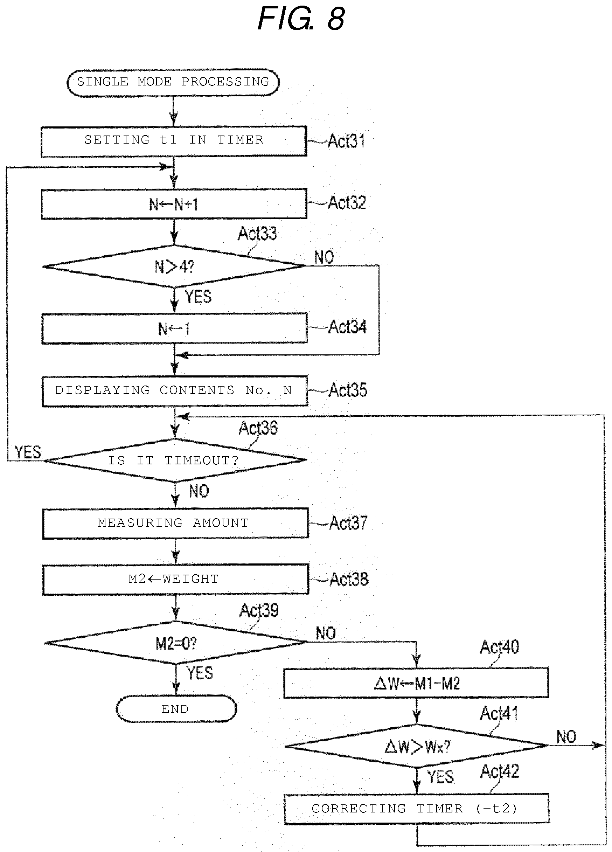

If the single mode processing is started, as illustrated in FIG. 8, the CPU 111 sets the standard display time t1 in the timer 115 (Act 31). Subsequently, the CPU 111 executes the same processes as those in Act 6 to Act 14 in the first embodiment, as Act 32 to Act 39, respectively. In addition, if the weight M2 is larger than "0" (No in Act 39), the CPU 111 calculates ΔM as a difference between the weight M1 and the weight M2, (Act 40). The CPU 111 determines whether ΔM is larger than a second threshold value Wx, (Act 41).

According to the embodiment, if the weight M1 is greater than the first threshold value Ws, it is assumed that a long registration processing time is required. However, for example, if an item of merchandise that has a large weight is included, such as "rice" or "beverage in case," a registration processing time is likely shorter than the assumption. If merchandise with a large weight is registered, a weight which is measured in the scale unit 600 is greatly changed. Therefore, according to the embodiment, if the second threshold value Wx is set as, for example, 1 kg, and the difference weight ΔM exceeds 1 kg (Yes in Act 41), the CPU 111 performs a correction so that the setting time T1 of the timer 115 is reduced by the correction time t2, as Act 42 (correcting section). In addition, the CPU 111 returns to process in Act 36, and determines whether the timer 115 has entered the timeout state. If the timer 115 has not entered the timeout state (No in Act 36), the CPU 111 similarly repeats the process in Act 37 and thereafter. If the timer 115 has entered the timeout state (Yes in Act 36), the CPU 111 returns to the process in Act 32.

Conversely, if the difference weight ΔM does not exceed 1 kg (Yes in Act 41), the CPU 111 returns to process in Act 36 without executing the process in Act 42. Accordingly, in this case, the process in Act 37 and thereafter are repeated, until the setting time T1 (before the correction) elapses.

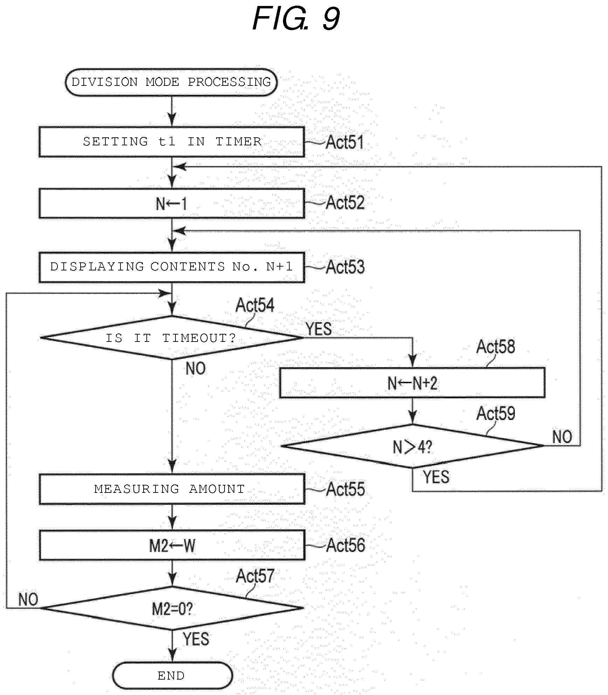

Meanwhile, if the division mode is selected, as illustrated in FIG. 9, the CPU 111 sets the standard display time t1 in the timer 115, (Act 51). Subsequently, the CPU 111 sets the number counter N to "1", (Act 52). In addition, the CPU 111 reads first content data associated with a value of the number counter N, and second content data associated with a value of the number counter N+1, from the content table 801. The CPU 111 causes the image display area 702 to display two images based on the first content data and the second content data. For example, the CPU 111 horizontally divides the screen of the image display area 702 into two areas, causes one side to display the image based on the first content data, and causes the other side to display the image based on the second content data. Accordingly, if a value of the number counter N is "1", an image of content data A and an image of content data B are displayed in the image display area 702.

If these two images are displayed in the image display area 702, the CPU 111 starts the timer 115 at the same time. In addition, the CPU 111 determines whether the timer 115 entered the timeout state, (Act 54). If the tracking time does not exceed a set time T (No in Act 54), the CPU 111 executes the same processes as those in Act 12 to Act 14 in the first embodiment, as Act 55 to Act 57.

In contrast to this, if the tracking time exceeds the set time T, that is, if the timer 115 enters the timeout state (Yes in Act 54), the CPU 111 increments the number counter N by "2", as Act 58. In addition, the CPU 111 determines whether the number counter N exceeds the maximum value of the consecutive numbers of the content table 801 (for example, "4"), as Act 59. If the number counter N exceeds the maximum value (Yes in Act 59), the CPU 111 returns to the process in Act 52, and sets the number counter N to "1". In addition, the CPU 111 proceeds to the process in Act 53. Meanwhile, if the number counter N does not exceed the maximum value (No in Act 59), the CPU 111 proceeds to the process in Act 53 without performing the process in Act 52.

In this manner, in the second embodiment, the single mode processing is executed if a total weight M of merchandise is larger than the first threshold value Ws, and the division mode processing is executed if the total weight is smaller than the first threshold value Ws. When the single mode processing is executed, each image of the content data A, B, C, and D is displayed in the image display area 702 as one image, by being switched after every time t1. Conversely, when the division mode processing is executed, two images of the content data A, B, C, and D form a set, and are displayed in the image display area 702 by being switched every time t1. Accordingly, when the division mode processing is executed, that is, when it is assumed that a time required to register purchased merchandise is short, it is possible to show a customer images based on the content data A, B, C, and D using a time which is a half compared to a time if the single mode processing is executed, that is, a case in which it is assumed that a time required to register purchased merchandise is long.

### (Modification Example)

In the above described embodiment, an amount of purchased merchandise is estimated based on a total weight of the purchased merchandise; however, the amount of purchased merchandise may be estimated using other techniques. For example, a shopping basket which is placed on the accounting counter 300 is photographed from the upper portion of the shopping basket using an image sensor, e.g., a camera, and the number of merchandise in the shopping basket may be assumed or calculated from the photographed image.

As another example, a key which denotes whether or not an amount of purchased merchandise is large or small is provided in the keyboard 102. In addition, a cashier may view a shopping basket which is placed on the accounting counter 300, determine whether an amount of purchased merchandise is large or small, and operate a key on the keyboard 202. In both cases, the amount of purchased merchandise may be estimated based on sensing of the key input.

In the above described embodiment, the display control device with respect to the customer display of the POS terminal is exemplified; however, the exemplary embodiment can be similarly applied to a display control for other displays.

Installation of the display control device is generally performed in a state in which the control program is stored in the ROM. However, it is not limited to this, and a control program which is transferred separately from a computer may be written in a writable storage device which is provided in the computer, according to an operation of a user, or the like. A transfer of a control program can be performed by recording thereof in a removable recording medium, or using a communication through a network. A form of the recording medium does not matter, when it is possible to store a program, and a device can read the program, like in a CD-ROM, or a memory card. Functions obtained through installing or down loading of the program may be executed in cooperation with the operating system (OS) in the device.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope and framework of the inventions.

## Claims

1. A POS terminal device comprising:
a display device;
a sensor; and
a processor configured to:
determine an amount of merchandise based on a signal output from the sensor,
determine a display pattern of a plurality of content images based on the determined amount of merchandise, and
control the display device to display the content images according to the determined display pattern.

2. The POS terminal device according to claim 1, wherein the processor determines a display time for displaying each of the content images, based on the amount of merchandise.

3. The POS terminal device according to claim 2, wherein the processor determines the display time to be a first predetermined time if the amount of merchandise detected is larger than a first predetermined amount, and determines the display time to be a second time shorter than the first time if the amount of merchandise detected is smaller than the first predetermined amount.

4. The POS terminal device according to any one of claims 1 to 3, wherein:
the processor determines a total amount of merchandise when registration of the merchandise begins, and detects a remaining amount of the merchandise after at least one item of the merchandise has been registered, and
the processor calculates a difference between the total amount and the remaining amount, and reduces the display time by a correction amount if the calculated difference is larger than a predetermined difference.

5. The POS terminal device according to any one of claims 1 to 4,
wherein the processor determine a number of content images displayed at one time based on the amount of merchandise.

6. The POS terminal device according to any one of claims 1 to 5, wherein the processor controls the display device to display one content image at one time if the determined amount of merchandise is larger than a first predetermined amount, controls the display device to display a plurality of content images at the same time if the determined amount of merchandise is smaller than the first predetermined amount.

7. The POS terminal device according to any one of claims 1 to 6,
wherein the sensor is a weight sensor and the amount of merchandise corresponds to the weight of merchandise.

8. A method for controlling a display unit on a POS terminal device comprising the steps of:
determining an amount of merchandise based on a signal output from a sensor;
determining a display pattern of a plurality of content images based on the determined amount of merchandise; and
controlling the display unit to display the content images according to the determined display pattern.

9. The method according to claim 8, wherein determining the display pattern includes determining a display time for displaying each of the content images, based on the amount of merchandise.

10. The method according to claim 9, wherein the display time is determined to be a first predetermined time if the amount of merchandise detected is larger than a first predetermined amount, and the display time is determined to be a second time shorter than the first time if the amount of merchandise detected is smaller than the first predetermined amount.

11. The method according to any one of claims 8 to 10, wherein a total amount of merchandise is determined when registration of the merchandise begins, and a remaining amount of the merchandise is detected after at least one item of the merchandise has been registered, the method further comprising the steps of:
calculating a difference between the total amount and the remaining amount; and
reducing the display time by a correction amount if the calculated difference is larger than a predetermined difference.

12. The method according to any one of claims 8 to 11, further comprising the step of:
determining a number of content images displayed at one time based on the amount of merchandise.

13. The method according to any one of claims 8 to 12, wherein the display unit is controlled to display one content image at one time if the determined amount of merchandise is larger than a first predetermined amount, and to display a plurality of content images on at the same time if the determined amount of merchandise is smaller than a first predetermined amount.

14. A non-transitory computer readable medium containing instructions for controlling a display unit on a POS terminal device, the instructions causing a computer to perform the step of the method according to any one of claims 8 to 13.

15. A system for reading the merchandise, comprising the POS terminal device according to any one of claims 1 to 7.
